# DEMANDE DE BREVET EUROPEEN

(11) **EP 4 561 138 A1**
(43) Date de publication de la demande: **28.05.2025**
(21) Numéro de dépôt: 24215591.9
(22) Date de dépôt: 26.11.2024
(51) Int. Cl.: H04W 12/30, H04W 12/40

(54) **PROCÉDÉS POUR CHARGER UN PROFIL DE COMMUNICATION DANS UN ÉLÉMENT SÉCURISÉ, ET ÉLÉMENT SÉCURISÉ, UNITÉ DE GESTION DE PROFIL, ET DISPOSITIF DE COMMUNICATION ASSOCIÉS**

(30) Priorité: 27.11.2023 FR 2313085
(71) Demandeur: Idemia France, 92400 Courbevoie (FR)
(72) Inventeur: DUMOULIN, Jérôme, 92400 COURBEVOIE (FR); DOS SANTOS, Elder, 92400 COURBEVOIE (FR); WOZNIAK, Tomasz, 92400 COURBEVOIE (FR)
(74) Mandataire: Idemia

(57) **Abrégé**

La présente invention concerne des procédés pour charger un profil de communication dans un élément sécurisé (SE), ainsi qu'un élément sécurisé (SE), une unité de gestion de profil (LPA), et un dispositif de communication (APP) associés. Plus particulièrement, la présente invention concerne un procédé mis en oeuvre par un élément sécurisé (SE) équipant un dispositif de communication (APP), le procédé comprenant, pour un profil de communication, une première phase de chargement du profil dans l'élément sécurisé (SE) comprenant :
- suite à une réception d'une commande de suspension de chargement en provenance de l'unité de gestion de profil, une suspension du chargement du profil comprenant :
- un enregistrement des clés de sessions (S-ENC, S-MAC) générées ; et
- un envoi, à l'unité de gestion de profil (LPA), d'un jeton (PTK) signé par l'élément sécurisé (SE).

## Description

### Domaine technique

La présente invention se rapporte au domaine des éléments sécurisés de type eUICC (pour « embedded Universal Integrated Circuit Card » en anglais) dans lesquels sont enregistrés des profils de communication. En particulier, la présente invention concerne des procédés pour charger un profil de communication dans un élément sécurisé, ainsi qu'un élément sécurisé, une unité de gestion de profil, et un dispositif de communication associés. La présente invention trouve une application particulièrement avantageuse, bien que nullement limitative, pour charger et installer des profils de communication dans des éléments sécurisés de type eUICC intégrés à des dispositifs de communication utilisant les réseaux de téléphonie mobile, tels que des téléphones, des objets connectés, des véhicules, etc.

### Technique antérieure

L'invention se place notamment dans le contexte particulier de l'installation des profils de communication dans les éléments sécurisés de type eUICC intégrés à des dispositifs de communication, par exemple des terminaux de télécommunications de type téléphones intelligents (ou « smartphones » en anglais), des compteurs électriques ou d'eau communicants, des véhicules. Les éléments sécurisés de type eUICC sont décrits dans la norme GSMA SGP.02 intitulée « Remote Provisioning Architecture for Embedded UICC », par exemple dans sa version 4.2.1 publiée en novembre 2021.

Les éléments sécurisés de type eUICC sont intégrés de manière permanente aux dispositifs de communication pour remplacer les cartes SIM physiques amovibles, traditionnellement utilisées pour authentifier un utilisateur auprès de l'opérateur d'un réseau de téléphonie mobile. Les éléments sécurisés de type eUICC sont configurés pour stocker un ou plusieurs profils de communication et sont reprogrammables. Ces éléments sécurisés permettent par exemple à un utilisateur de changer d'opérateur sans pour autant avoir à remplacer physiquement une carte SIM.

De façon connue, un profil de communication est un ensemble de données permettant de s'authentifier auprès d'un opérateur d'un réseau de communication et de communiquer sur ce réseau. Typiquement, un profil de communication comprend des données de souscription comme un identifiant IMSI (pour « International Mobile Subscriber Identity » en anglais), des clés de chiffrement et des paramètres d'algorithmes d'authentification propres à l'opérateur associé. Il peut en outre comprendre un système de fichiers, des applications, et/ou des règles d'exécution prédéterminées. De tels profils de communication sont notamment définis dans la norme GSMA SGP.02 précitée et la norme Trusted Connectivity Alliance intitulée « eUICC Profile Package : Interoperable Format Test Spécification », par exemple dans sa version 3.2.1 publiée en décembre 2022.

Dans l'état actuel de la technique, les profils de communication sont notamment chargés et installés dans les éléments sécurisés par les fabricants de dispositifs de communication (« In-Factory Profile Loading » en anglais). L'installation d'un profil dans un élément sécurisé de type eUICC est en particulier définie par la norme GSMA SGP.02 précédemment citée ou par la norme GSMA SGP.22 intitulée « RSP Technical Spécification », par exemple dans sa version 3.0 publiée en Octobre 2022. Un fabricant de dispositifs de communication peut par exemple disposer de profils de communication fournis au préalable par un serveur de fourniture de profils (i.e. le serveur SM-DP+ dans la norme GSMA SGP.22 précitée) et installer ces profils en usine dans les éléments sécurisés intégrés dans les dispositifs de communication. L'avantage d'une telle installation est qu'une fois le dispositif sorti d'usine, il est en mesure de communiquer sur le réseau et d'accéder aux services de l'opérateur.

Cependant, l'installation d'un profil de communication dans un élément sécurisé équipant un dispositif de communication nécessite un temps particulièrement long. En fait, selon la norme GSMA, un profil est envoyé à un élément sécurisé sous la forme d'une pluralité d'éléments de profil définis selon le standard nommé ASN.1 et/ou selon la norme Trusted Connectivity Alliance précitée, ces éléments de profil étant chiffrés. La réception, le déchiffrement, et l'installation des éléments du profil par l'élément sécurisé sont des opérations chronophages. À l'échelle de milliers ou de millions de dispositifs de communication, le temps nécessaire pour installer en usine les profils de communication dans les éléments sécurisés est tel qu'il ne permet pas une exploitation efficiente des ressources du fabricant et conduit à une perte significative de productivité.

En définitive, les solutions existantes permettant de charger et d'installer en usine des profils de communication dans des éléments sécurisés intégrés dans des dispositifs de communication ne sont pas pleinement satisfaisantes en ce qu'elles requièrent un temps excessif.

### Exposé de l'invention

La présente invention a pour objectif de remédier à tout ou partie des inconvénients de l'art antérieur, notamment ceux exposés précédemment.

À cet effet, il est proposé un procédé mis en oeuvre par un élément sécurisé équipant un dispositif de communication, le procédé comprenant, pour un profil de communication, une première phase de chargement du profil dans l'élément sécurisé comprenant :
- une réception, en provenance d'une unité de gestion de profil du dispositif de communication, d'une clé publique d'un serveur de fourniture de profil associée (de manière unique) au profil ;
- une génération de clés de sessions à partir de la clé publique du serveur de fourniture de profil associée au profil ;
- suite à une réception d'une commande de suspension de chargement en provenance de l'unité de gestion de profil, une suspension du chargement du profil comprenant :
   - un enregistrement, dans une mémoire de l'élément sécurisé, des clés de sessions générées ; et
   - un envoi, à l'unité de gestion de profil, d'un jeton signé à partir d'une clé de chiffrement de l'élément sécurisé.

Le procédé proposé mis en oeuvre par l'élément sécurisé est un procédé pour charger au moins un profil de communication dans l'élément sécurisé.

Corrélativement, il est proposé un procédé mis en oeuvre par une unité de gestion de profil d'un dispositif de communication, le procédé comprenant, pour un profil de communication, une première phase de chargement du profil dans un élément sécurisé équipant le dispositif de communication comprenant :
- un enregistrement, dans une mémoire du dispositif de communication, d'éléments chiffrés du profil fournis par un serveur de fourniture de profil ;
- un envoi, à l'élément sécurisé, d'une clé publique du serveur de fourniture de profil associée (de manière unique) au profil ;
- un envoi, à l'élément sécurisé, d'une commande de suspension de chargement ; et
- un enregistrement, dans la mémoire du dispositif de communication, d'un jeton reçu en provenance de l'élément sécurisé et signé par l'élément sécurisé à partir d'une clé de chiffrement de l'élément sécurisé.

Le procédé proposé mis en oeuvre par l'unité de gestion de profil est un procédé pour charger au moins un profil de communication dans l'élément sécurisé.

La présente invention propose de charger dans la mémoire du dispositif de communication un profil chiffré fourni par un serveur de fourniture de profil (e.g. le serveur SM-DP+) et d'initier le chargement du profil dans l'élément sécurisé. Ensuite, le chargement du profil est suspendu (i.e. mis en pause) de sorte que : d'une part, le dispositif de communication comprenne en mémoire les éléments chiffrés du profil ainsi que le jeton signé par l'élément sécurisé ; et que, d'autre part, l'élément sécurisé comprenne en mémoire les clés de sessions associées au profil et permettant de déchiffrer ce profil.

De cette façon, la solution proposée permet non seulement de charger un profil chiffré dans la mémoire du dispositif de communication, mais également de lier de manière cryptographique le profil enregistré dans le dispositif de communication à l'élément sécurisé destiné à recevoir ce profil. En particulier, l'élément sécurisé génère les clés de session en utilisant la clé publique du serveur de fourniture de profil associé à ce profil, puis enregistre ces clés. Cela permet de s'assurer que l'élément sécurisé est impliqué dans le chargement de ce profil. En outre, le dispositif de communication enregistre à la fois les éléments chiffrés du profil et le jeton signé par l'élément sécurisé, la signature du jeton permettant de prouver l'implication de l'élément sécurisé dans le chargement de ce profil.

Suite à la suspension du chargement du profil, le dispositif de communication dispose de toutes les informations permettant de compléter l'installation du profil dans l'élément sécurisé. Autrement dit, le dispositif de communication ne nécessite pas d'informations supplémentaires, notamment fournies par le réseau, pour compléter l'installation du profil. La présente invention permet ainsi, de manière similaire aux solutions de l'art antérieur décrites ci-dessus, de fournir en sortie d'usine des dispositifs de communication en mesure d'accéder aux services d'un opérateur.

En revanche, en comparaison à ces solutions, la présente invention permet de réduire significativement le temps nécessaire pour charger en usine un profil de communication dans un élément sécurisé d'un dispositif de communication, ce qui permet d'augmenter la productivité de la chaine de production d'un fabricant de dispositifs de communication. En fait, la solution proposée permet de déporter le chargement et l'installation du profil dans l'élément sécurisé à un stade ultérieur, par exemple une fois le dispositif de communication déployé. Cela permet de déporter hors d'usine ces opérations chronophages pour un fabricant, et ce en maintenant un même niveau de sécurité.

Ainsi, la présente invention permet de fournir en un temps minime des dispositifs de communication en mesure d'accéder aux services d'un opérateur, tout en s'assurant que chaque profil de communication est effectivement lié à l'élément sécurisé destiné à installer ce profil.

Selon un mode de mise en oeuvre particulier, la suspension du chargement du profil est déclenchée suite à la génération, par l'élément sécurisé, des clés de sessions et avant une réception, par l'élément sécurisé, d'éléments chiffrés du profil.

Selon ce mode de mise en oeuvre, le chargement du profil dans l'élément sécurisé est suspendu suite à la génération des clés de sessions par l'élément sécurisé en utilisant la clé publique du serveur de fourniture de profil associée à ce profil. Cela permet de s'assurer que l'élément sécurisé a été impliqué de manière cryptographique dans le chargement du profil. De plus, le chargement est ici suspendu avant le chargement et l'installation des éléments chiffrés du profil dans l'élément sécurisé, c'est-à-dire avant les opérations chronophages pour un fabricant.

Ce mode de mise en oeuvre est particulièrement avantageux en ce qu'il permet de minimiser le temps de chargement du profil réalisé en usine par un fabricant de dispositifs de communication, tout en assurant que le profil enregistré dans le dispositif de communication est lié de manière cryptographique à l'élément sécurisé destiné à installer ce profil.

Selon un mode de mise en oeuvre particulier, le jeton signé par l'élément sécurisé est envoyé à destination du serveur de fourniture de profil ou d'un serveur tiers.

L'envoi du jeton permet de signaler à une entité tierce, par exemple l'opérateur réseau associé au profil de communication, que le profil a été chargé dans un dispositif de communication. La signature du jeton par l'élément sécurisé permet en outre de prouver à l'entité tierce que le profil a été chargé dans le dispositif de communication comprenant l'élément sécurisé effectivement destiné à recevoir ce profil.

Selon un mode de mise en oeuvre particulier, le procédé mis en oeuvre par l'élément sécurisé comprend une deuxième phase de chargement du profil comprenant, suite à la réception d'une commande de reprise de chargement en provenance de l'unité de gestion de profil :
- une réception, en provenance de l'unité de gestion de profil, du jeton et d'éléments chiffrés du profil ; et
- un déchiffrement des éléments chiffrés du profil à partir des clés de sessions enregistrées et une installation des éléments déchiffrés du profil dans la mémoire de l'élément sécurisé.

Corrélativement, selon un mode de mise en oeuvre particulier, le procédé mis en oeuvre par l'unité de gestion de profil comprend une deuxième phase de chargement du profil comprenant :
- un envoi, à l'élément sécurisé, d'une commande de reprise de chargement ; et
- un envoi, à l'élément sécurisé, du jeton et d'éléments chiffrés du profil.

Il est proposé ici de réaliser une deuxième phase de chargement permettant de compléter l'installation du profil dans l'élément sécurisé et d'activer celui-ci. À l'issue de cette deuxième phase de chargement, le dispositif de communication peut alors accéder aux services de l'opérateur réseau associé au profil.

Il convient de noter que l'échange du jeton entre le dispositif de communication et l'élément sécurisé contribue à assurer la sécurité de la solution proposée pour charger un profil dans l'élément sécurisé. En effet, l'élément sécurisé peut vérifier la signature du jeton et donc son implication préalable lors de la première phase du chargement du profil. Cela permet en outre de vérifier que les éléments de profil chiffrés, fournis par l'unité de gestion et destinés à être installés, sont effectivement associés aux clés de session enregistrées.

Par ailleurs, aucune limitation n'est attachée à l'intervalle de temps entre la première et la deuxième phase de chargement, ni aux opérations réalisées par le dispositif entre celles-ci. En particulier, la deuxième phase de chargement peut être réalisée suite au déploiement du dispositif de communication, c'est-à-dire hors de l'usine du fabricant.

Comme indiqué ci-dessus, le dispositif de communication dispose, une fois le chargement du profil suspendu, de toutes les informations nécessaires pour compléter l'installation du profil. Le dispositif de communication pourrait par exemple compléter le chargement du profil en étant hors-ligne (i.e. non connecté au réseau).

Selon un mode de mise en oeuvre particulier, la deuxième phase de chargement (i.e. l'envoi de la commande de reprise de chargement) est déclenchée par : une mise sous tension (i.e. un démarrage ou « power-up » en anglais) du dispositif de communication ; une demande d'accès réseau du dispositif de communication ; une commande d'activation obtenue via une interface utilisateur ; une commande d'activation émise par un serveur tiers ; ou un changement d'un mode de fonctionnement du dispositif de communication (e.g. une sortie d'un mode usine).

Ce mode de mise en oeuvre permet de contrôler précisément la reprise du chargement du profil de communication dans l'élément sécurisé et donc l'activation du profil.

Selon un mode de mise en oeuvre particulier, le procédé comprend, suite à la première phase de chargement et avant la deuxième phase de chargement, une mise hors tension (i.e. un arrêt ou « power-down » en anglais) et une mise sous tension (i.e. un démarrage ou « power-up » en anglais) du dispositif de communication. En outre, la deuxième phase de chargement (i.e. l'envoi de la commande de reprise de chargement) peut être déclenchée par : la mise sous tension du dispositif de communication ; ou par une demande d'accès réseau suivant la mise sous tension.

Ce mode de mise en oeuvre permet notamment de déporter l'installation du profil de communication et son activation à un stade ultérieur, par exemple lorsque le dispositif de communication est déployé sur le terrain, c'est-à-dire hors de l'usine du fabricant.

Selon un mode de mise en oeuvre particulier, un autre jeton signé par l'élément sécurisé est envoyé à destination du serveur de fourniture de profil suite à l'installation des éléments déchiffrés du profil ou à un serveur tiers.

Ce mode de mise en oeuvre permet de signaler au serveur de fourniture de profil (i.e. le serveur SM-DP+), et en particulier à l'opérateur réseau associé au profil de communication, que l'installation du profil de communication dans l'élément sécurisé a été complétée et que ce profil est activé.

Selon un mode de mise en oeuvre particulier, le procédé mis en oeuvre par l'élément sécurisé comprend, pour un autre profil de communication (distinct du profil mentionné ci-avant), une dite première phase de chargement de l'autre profil, et peut en outre comprendre une dite deuxième phase de chargement de l'autre profil.

Corrélativement, selon un mode de mise en oeuvre, le procédé mis en oeuvre par l'unité de gestion comprend une dite première phase de chargement de l'autre profil, et peut en outre comprendre une dite deuxième phase de chargement de l'autre profil.

Ainsi, le procédé mis en oeuvre par l'élément sécurisé et le procédé mis en oeuvre par l'unité de gestion de profil peuvent respectivement comprendre, pour chaque profil d'une pluralité de profils, une dite première phase et une dite deuxième phase de chargement du profil.

Ce mode de mise en oeuvre est particulièrement avantageux en ce qu'il permet de charger dans le dispositif de communication une pluralité de profils de communication.

Selon un mode de mise en oeuvre particulier, la commande de suspension de chargement et la clé publique du serveur de fourniture de profil sont comprises dans un même message.

Selon ce mode de mise en oeuvre, l'unité de gestion signale dès le début du chargement du profil à l'élément sécurisé que le chargement du profil sera suspendu. Cela permet notamment de minimiser le nombre de messages échangés entre l'unité de gestion et l'élément sécurisé. De ce fait, ce mode de mise en oeuvre permet de minimiser la durée de la première phase de chargement.

De manière alternative, la commande de suspension de chargement peut être comprise dans un message dédié envoyé par l'unité de gestion à l'élément sécurisé, ce qui permet de contrôler précisément la suspension du chargement du profil. Par exemple, la commande de suspension de chargement peut être émise par l'unité de gestion de profil en réponse à un message de l'élément sécurisé signalant que les clés de sessions ont été générées.

Selon un aspect de l'invention, il est également proposé un procédé mis en oeuvre par le dispositif de communication pour charger au moins un profil de communication dans un élément sécurisé équipant le dispositif de communication, ce procédé comprenant : les étapes du procédé mis en oeuvre par l'élément sécurisé conforme à l'invention ; et les étapes du procédé mis en oeuvre par l'unité de gestion de profil conforme à l'invention.

Selon un aspect de l'invention, il est proposé un élément sécurisé comprenant :
- un module de réception, en provenance d'une unité de gestion de profil d'un dispositif de communication, d'une clé publique d'un serveur de fourniture de profil associée (de manière unique) au profil ;
- un module de génération de clés de sessions à partir de la clé publique du serveur de fourniture de profil associée au profil ;
- un module de suspension d'un chargement du profil suite à une réception d'une commande de suspension de chargement en provenance de l'unité de gestion de profil, le module de suspension comprenant :
   - un module d'enregistrement, dans une mémoire de l'élément sécurisé des clés de sessions générées ; et
   - un module d'envoi, à l'unité de gestion de profil, d'un jeton signé à partir d'une clé de chiffrement de l'élément sécurisé.

L'élément sécurisé peut être configuré pour mettre en oeuvre chacun des modes de mise en oeuvre du procédé selon l'invention. En particulier, pour chaque étape d'un procédé conforme à l'invention, l'élément sécurisé proposé peut comprendre un module correspondant configuré pour mettre en oeuvre ladite étape.

Corrélativement, il est proposé une unité de gestion de profil de communication d'un dispositif de communication comprenant :
- un module d'enregistrement, dans une mémoire du dispositif de communication, d'éléments chiffrés du profil fournis par un serveur de fourniture de profil ;
- un module d'envoi, à un élément sécurisé équipant le dispositif de communication, d'une clé publique du serveur de fourniture de profil associée (de manière unique) au profil ;
- un module d'envoi, à l'élément sécurisé, d'une commande de suspension de chargement ; et
- un module d'enregistrement, dans la mémoire du dispositif de communication, d'un jeton reçu en provenance de l'élément sécurisé et signé par l'élément sécurisé à partir d'une clé de chiffrement de l'élément sécurisé.

L'unité de gestion de profil peut être configurée pour mettre en oeuvre chacun des modes de mise en oeuvre du procédé selon l'invention. En particulier, pour chaque étape d'un procédé conforme à l'invention, l'unité de gestion de profil proposée peut comprendre un module correspondant configuré pour mettre en oeuvre ladite étape.

Selon un aspect de l'invention, il est proposé un dispositif de communication comprenant un élément sécurisé conforme à l'invention et/ou une unité de gestion de profil conforme à l'invention.

Selon un aspect de l'invention, il est proposé un programme d'ordinateur comportant des instructions pour l'exécution des étapes d'un procédé conforme à l'invention, lorsque ledit programme est exécuté par au moins un processeur.

Plus particulièrement, il est proposé un premier programme d'ordinateur comportant des instructions pour l'exécution des étapes d'un procédé mis en oeuvre par un élément sécurisé, lorsque ledit programme est exécuté par au moins un processeur. Il est également proposé un deuxième programme d'ordinateur comportant des instructions pour l'exécution des étapes d'un procédé mis en oeuvre par une unité de gestion de profil conforme à l'invention, lorsque ledit programme est exécuté par au moins un processeur. De plus, il est proposé un ensemble de programmes d'ordinateur comprenant les premier et deuxième programmes d'ordinateur.

Dans le contexte de l'invention, un programme d'ordinateur peut être formé d'une ou plusieurs sous-parties stockées dans une même mémoire ou dans des mémoires distinctes. Le programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un aspect de l'invention, il est proposé un support d'informations lisible par un processeur ou un ordinateur et sur lequel est enregistré un programme d'ordinateur conforme à l'invention ou un ensemble de programmes d'ordinateur conforme à l'invention.

Le support d'informations peut être n'importe quelle entité ou dispositif capable de stocker le programme. Par exemple, le support peut comporter un moyen de stockage, tel qu'une mémoire non-volatile ou ROM, par exemple un CD-ROM ou une ROM de circuit microélectronique. D'autre part, le support d'informations peut être un support transmissible tel qu'un signal électrique ou optique, qui peut être acheminé via un câble électrique ou optique, par radio ou par un réseau de télécommunication ou par un réseau informatique ou par d'autres moyens. Le programme selon l'invention peut être en particulier téléchargé sur un réseau informatique. Alternativement, le support d'informations peut être un circuit intégré dans lequel le programme est incorporé, le circuit étant adapté pour exécuter ou pour être utilisé dans l'exécution du procédé en question.

L'élément sécurisé, l'unité de gestion de profil, le dispositif de communication, le programme d'ordinateur, et le support d'informations proposés disposent des avantages décrits ci-dessus en lien avec les procédés mis en oeuvre par l'élément sécurisé et l'unité de gestion de profil.

### Brève description des dessins

D'autres caractéristiques et avantages de la présente invention ressortiront de la description fournie ci-après, illustrant des modes de mise en oeuvre de l'invention donnés à titre d'exemple et dépourvus de tout caractère limitatif, en référence aux dessins ci-joints :

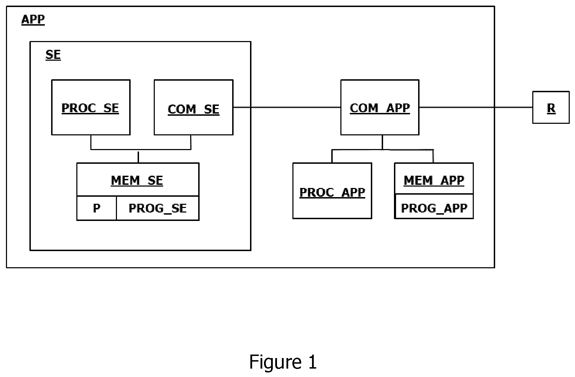

La figure 1 représente un exemple d'architecture matérielle d'un dispositif de communication équipé d'un élément sécurisé selon un mode de réalisation de l'invention ;

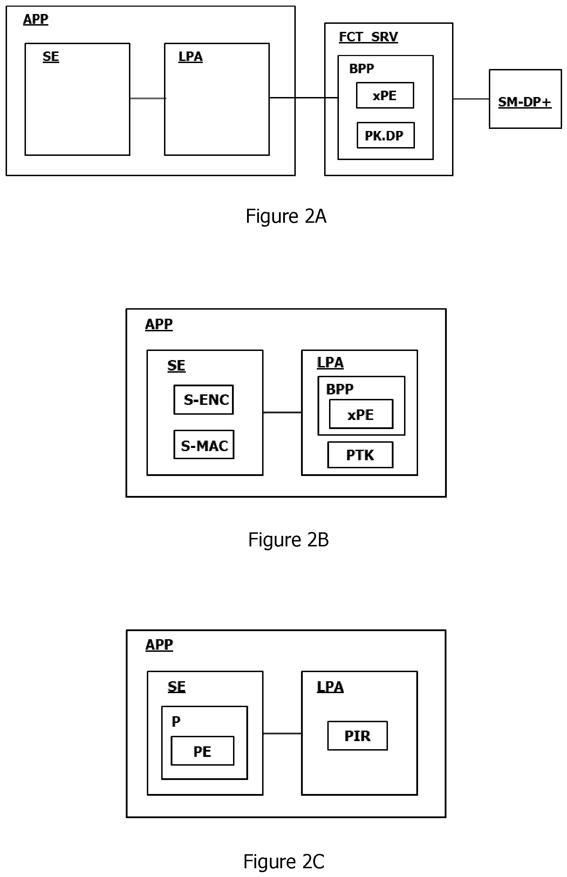

La figure 2A, la figure 2B, et la figure 2C représentent un dispositif de communication équipé d'un élément sécurisé au cours de différentes étapes d'un procédé mis en oeuvre par l'élément sécurisé et d'un procédé mis en oeuvre par une unité de gestion de profil du dispositif de communication selon un mode de mise en œuvre de l'invention; et

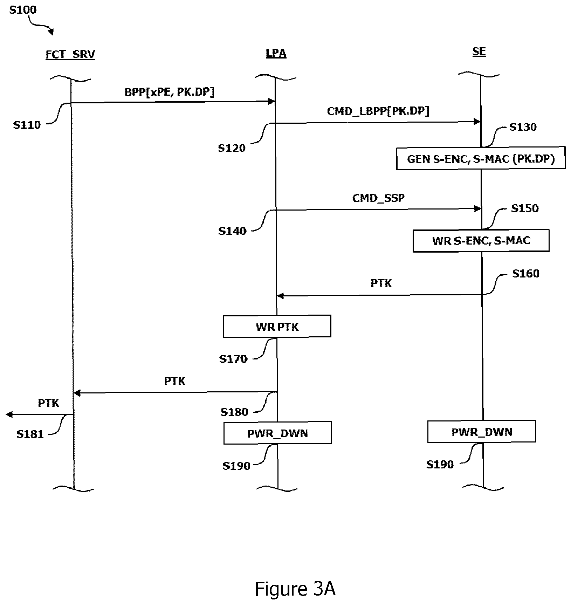

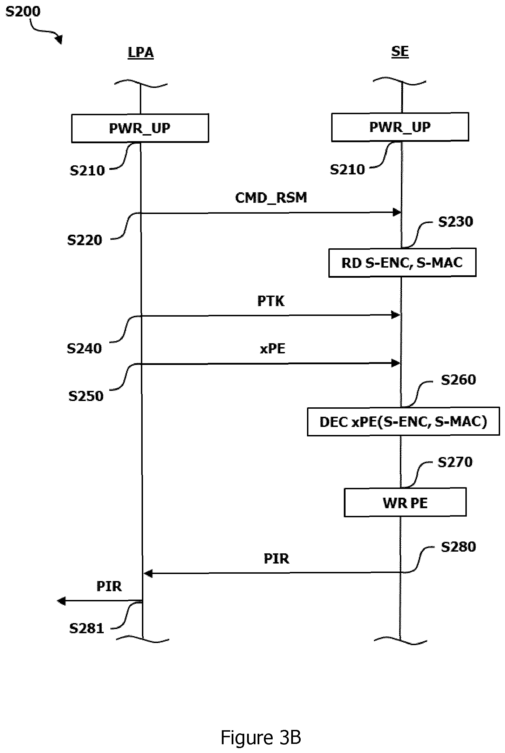

La figure 3A et la figure 3B représentent, sous forme d'ordinogramme, des étapes d'un procédé mis en oeuvre par un élément sécurisé équipant un dispositif de communication et d'un procédé mis en oeuvre par une unité de gestion de profil du dispositif de communication selon un mode de mise en œuvre de l'invention.

### Description des modes de réalisation

La présente invention s'applique, en particulier, à l'installation d'un profil de communication dans un élément sécurisé de type eUICC intégré à un dispositif de communication. La description suivante de l'invention se référera à ce contexte particulier, qui n'est donné qu'à titre d'exemple illustratif et ne doit pas limiter l'invention.

Nous introduisons ci-après, en référence à la figure 1, l'architecture du dispositif de communication équipé d'un élément sécurisé selon un exemple. Nous décrivons ensuite, en référence aux figures 2A-2C et 3A-3B, un mode de mise en oeuvre d'un procédé mis en oeuvre par l'élément sécurisé du dispositif de communication, et d'un procédé mis en oeuvre par une unité de gestion de profil d'un dispositif de communication. Ces deux procédés forment par ailleurs un procédé pour charger au moins un profil de communication dans un élément sécurisé équipant un dispositif de communication.

L'élément sécurisé peut être configuré pour la mise en oeuvre du procédé mentionné ci-avant. Une unité de gestion de profil sera également décrite, configurée pour la mise en oeuvre de l'autre procédé.

La figure 1 représente un exemple d'architecture matérielle d'un dispositif de communication équipé d'un élément sécurisé selon un mode de réalisation de l'invention.

Le dispositif de communication APP comprend selon le mode de réalisation illustré par la figure 1 : un élément sécurisé SE ; une mémoire non-volatile MEM_APP ; et une unité de traitement ou processeur PROC_APP. Le dispositif APP peut par exemple être un téléphone mobile, une tablette, un ordinateur personnel, un capteur équipé d'un module de communication, ou tout autre dispositif de communication.

Plus particulièrement, le dispositif APP dispose de l'architecture matérielle d'un ordinateur La mémoire MEM_APP constitue un support d'informations conforme à l'invention, lisible par le processeur PROC_APP, sur lequel est enregistré un programme d'ordinateur PROG_APP conforme à un aspect de l'invention. Le programme PROG_APP comporte des instructions pour réaliser des étapes d'un procédé mis en oeuvre par une unité de gestion de profil LPA (représentée sur les figures 2A-2C) du dispositif APP, lorsque le programme PROG_APP est exécuté par le processeur PROC_APP. De plus, le programme PROG_APP définit en particulier une unité de gestion de profil LPA et les modules fonctionnels associés, qui s'appuient ou commandent les éléments matériels du dispositif APP.

Il convient de souligner que, pour chacune des étapes ou opérations décrites ci-après et mises en oeuvre par l'unité de gestion de profil LPA, celle-ci peut comprendre un module correspondant configuré pour mettre en oeuvre ladite étape ou opération.

Tel qu'illustré par la figure 1, le dispositif APP dispose d'un module de communication COM_APP configuré pour communiquer avec l'élément sécurisé SE. Le module de communication COM_APP est en outre configuré pour communiquer, par l'intermédiaire d'un réseau de communication R (e.g. un réseau de téléphonie mobile), avec d'autres dispositifs de communication (non représentés sur la figure 1), tels que des serveurs. Aucune limitation n'est attachée à la nature des interfaces de communication entre le dispositif APP et le réseau de communication R.

L'élément sécurisé SE comprend selon le mode de réalisation illustré par la figure 1 : une mémoire non-volatile MEM_SE ; et une unité de traitement ou processeur PROC_SE.

L'élément sécurisé SE équipe le dispositif de communication APP. Il peut notamment être intégré de manière permanente à ce dispositif, par exemple par soudage. Nous considérons ci-après que l'élément sécurisé SE est un élément de type eUICC selon la norme GSMA SGP.02 ou GSMA SGP.22 précitées. Il convient néanmoins de noter que l'invention s'applique à tout type d'élément sécurisé, y compris des éléments sécurisés autres que des éléments eUICC mais qui permettent également le stockage de profils de manière sécurisée.

Dans le contexte de l'invention, un élément sécurisé est un dispositif électronique (e.g. un circuit) configuré pour traiter et stocker des données de manière sécurisée, c'est-à-dire en conformité avec les règles et les exigences de sécurité fixées par les autorités de confiance. Plus précisément, un élément sécurisé met en oeuvre un système d'exploitation, protégé contre tout accès non autorisé, et configuré pour exécuter un ensemble de programmes d'ordinateur et pour stocker des données confidentielles.

Tel qu'illustré sur la figure 1, la mémoire MEM_SE de l'élément sécurisé SE est destinée à stocker au moins un profil de communication P. La mémoire MEM_SE comprend notamment un ou plusieurs domaines sécurisés (communément noté ISD-P, non représenté) respectivement destiné à contenir un profil de communication P. Nous détaillons ci-après le chargement du profil de communication P dans la mémoire MEM_SE de l'élément sécurisé SE en référence aux figures 2A-2C et 3A-3B.

Plus particulièrement, l'élément sécurisé SE dispose de l'architecture matérielle d'un ordinateur La mémoire MEM_SE associée à l'élément sécurisé SE constitue un support d'informations conforme à un aspect de l'invention, lisible par le processeur PROC_SE, sur lequel est enregistré un programme d'ordinateur PROG_SE conforme à l'invention. Le programme PROG_SE comporte des instructions pour réaliser des étapes d'un procédé mis en oeuvre par l'élément sécurisé SE équipant le dispositif APP, lorsque le programme PROG_SE est exécuté par le processeur PROC_SE. De plus, le programme PROG_SE définit les modules fonctionnels de l'élément sécurisé SE, qui s'appuient ou commandent les éléments matériels de ce dernier.

Notons que, pour chacune des étapes ou opérations décrites ci-après et mises en oeuvre par l'élément sécurisé SE, ce dernier peut comprendre un module correspondant configuré pour mettre en oeuvre ladite étape ou opération.

Tel qu'illustré par la figure 1, l'élément sécurisé SE dispose d'un module de communication COM_SE configuré pour communiquer avec le dispositif de communication APP. Les communications entre l'élément sécurisé SE et le dispositif APP peuvent par exemple être conformes à la norme ISO 7816, et plus particulièrement à la norme ISO 7816-3 (publiée en novembre 2006) et à la norme ISO 7816-4 (publiée en mai 2020).

Les architectures du dispositif de communication APP et de l'élément sécurisé SE ayant été présentées, nous décrivons maintenant le procédé proposé pour charger un profil de communication P dans la mémoire MEM_SE de l'élément sécurisé SE.

La figure 2A, la figure 2B, et la figure 2C représentent un dispositif de communication équipé d'un élément sécurisé au cours de différentes étapes d'un procédé mis en oeuvre par l'élément sécurisé et d'un procédé mis en oeuvre par une unité de gestion de profil du dispositif de communication selon un mode de mise en oeuvre de l'invention.

Comme indiqué précédemment, la présente invention permet de charger un profil de communication P dans l'élément sécurisé SE du dispositif APP introduit en référence à la figure 1.

La présente invention vise notamment à réduire le temps nécessaire à un fabricant pour charger en usine un profil dans un élément sécurisé d'un dispositif de communication (« In-Factory Profile Loading » en anglais).

Pour ce faire, la présente invention propose de charger en usine le package d'installation BPP (i.e. un paquet d'installation, ou « Bound Profile Package » en anglais) du profil P dans le dispositif APP et d'initier le chargement du profil P. Ensuite, le chargement du profil P est suspendu de sorte que le profil enregistré dans le dispositif APP soit lié de manière cryptographique à l'élément sécurisé SE destiné à recevoir ce profil. On entend par « suspension » une mise en pause, c'est-à-dire une cessation temporaire du chargement du profil P.

Suite à la suspension du chargement du profil, le dispositif APP dispose de toutes les informations permettant de compléter l'installation du profil P dans l'élément sécurisé SE. La solution proposée permet de déporter hors d'usine le chargement et l'installation du profil P dans l'élément sécurisé SE, c'est-à-dire les opérations chronophages pour le fabricant, et ce en maintenant un même niveau de sécurité.

Par conséquent, le procédé proposé comprend : une première phase de chargement illustrée par la figure 3A (par exemple, réalisée en usine) ; et une deuxième phase de chargement illustrée par la figure 3B (par exemple, réalisée une fois le dispositif APP déployé sur le terrain).

Nous décrivons ci-après le procédé proposé en référence aux figures 3A et 3B. En complément, nous décrivons également les figures 2A, 2B, et 2C, qui représentent respectivement le dispositif de communication APP : avant la première phase de chargement S100 ; entre la première phase S100 et la deuxième phase de chargement S200 ; et suite à la deuxième phase de chargement S200.

Il importe de noter que le procédé proposé pour charger le profil P dans l'élément sécurisé SE est mis en oeuvre par le dispositif APP et comprend : les étapes d'un procédé mis en oeuvre par l'élément sécurisé SE équipant le dispositif APP ; et les étapes d'un procédé mis en oeuvre par une l'unité de gestion de profil LPA du dispositif APP.

Le procédé proposé peut mettre en oeuvre tout ou partie des étapes de la sous-procédure d'installation d'un profil conforme à la norme GSMA SGP.22. La description suivante de l'invention se référera à cette sous-procédure d'installation à titre d'exemple illustratif et non-limitatif, l'invention s'appliquant bien évidemment à d'autres procédures d'installation d'un profil dans un élément sécurisé.

De plus, nous décrivons ci-dessous un exemple de mise en oeuvre de l'invention dans lequel l'assistant local de profil (i.e. le « Local Profile Assistant » en anglais dans la norme GSMA SGP.22) est mis en oeuvre par l'unité de gestion de profil LPA du dispositif de communication APP. Cependant, l'invention n'est pas limitée à cet exemple, et celle-ci s'applique également aux modes de réalisation dans lesquels le module de l'assistant local de profil serait mis en oeuvre par l'élément sécurisé SE.

La figure 3A et la figure 3B représentent, sous forme d'ordinogramme, des étapes d'un procédé mis en oeuvre par un élément sécurisé équipant un dispositif de communication et d'un procédé mis en oeuvre par une unité de gestion de profil du dispositif de communication selon un mode de mise en oeuvre de l'invention.

Nous décrivons ci-après des étapes impliquant des échanges de données entre différentes entités, dont le serveur FCT_SRV, l'unité de gestion de profil LPA, et l'élément sécurisé SE. Chacune de ces étapes d'échange de données est mise en oeuvre par les deux entités qui communiquent entre elles. Par souci de concision, nous décrivons ces étapes d'échange de données du point de vue d'une seule entité (e.g. l'émetteur) ; mais l'autre entité (e.g. le récepteur) met également en oeuvre une étape correspondante. Par exemple, une étape d'envoi de données par l'unité de gestion de profil LPA correspondra à une étape de réception de ces données par l'élément sécurisé SE. De même, nous utilisons ci-après un unique signe de référence pour désigner une telle étape d'échange de données mise en oeuvre par les deux entités qui communiquent entre elles (par exemple, un unique signe de référence peut être utilisé pour désigner à la fois l'envoi par l'unité de gestion de profil LPA, et la réception par l'élément sécurisé SE).

La figure 3A illustre la première phase S100 du chargement du profil de communication P dans l'élément sécurisé SE. Tel qu'illustré par cette figure, la première phase de chargement S100 comprend tout ou partie des étapes S110 à S190 décrites ci-après.

Tel qu'illustré par la figure 2A, avant la mise en oeuvre du procédé proposé, un serveur d'usine FCT_SRV comprend un package d'installation BPP du profil P fourni par un serveur de fourniture de profil SM-DP+. Le package d'installation BPP comprend notamment une clé public PK.DP du serveur de SM-DP+ et des éléments chiffrés xPE associés au profil P.

À l'étape S110, le serveur d'usine FCT_SRV envoie, au dispositif APP, le package d'installation BPP, le dispositif APP enregistrant celui-ci dans sa mémoire non-volatile MEM_APP. Autrement dit, le serveur FCT_SRV charge le package d'installation BPP dans le dispositif APP.

Notons que, lors de la première phase de chargement S100, le serveur d'usine FCT_SRV n'est pas nécessairement connecté au serveur SM-DP+ (i.e. mode non connecté). Le package d'installation BPP du profil P peut être préalablement généré par le serveur SM-DP+ et fourni au serveur d'usine FCT_SRV.

Alternativement, il pourrait être envisagé un mode de réalisation selon lequel le dispositif APP recevrait le package d'installation BPP directement du serveur SM-DP+.

À l'étape S120, l'unité de gestion de profil LPA envoie, à l'élément sécurisé SE, une commande d'initialisation CMD_LBPP du chargement du profil P. La commande CMD_LBPP comprend des données d'initialisation comprenant notamment la clé publique PK.DP du serveur de fourniture de profil SM-DP+. En particulier, la clé publique PK.DP du serveur SM-DP+ est une clé à usage unique et associée au profil P.

Lors de cette étape, l'unité de gestion de profil LPA réalise par exemple l'étape [1] de la sous-procédure d'installation d'un profil telle que spécifiée dans la norme GSMA SGP.22.

À l'étape S130, l'élément sécurisé SE initie le chargement du profil P. L'élément sécurisé génère ainsi des clés de sessions S-ENC, S-MAC associées au profil P à partir de la clé publique PK.DP du serveur SM-DP+. Cette étape, et en particulier la génération des clés de sessions, permet de s'assurer que l'élément sécurisé SE est impliqué dans le chargement du profil P.

Les clés de sessions S-ENC, S-MAC sont par exemple générées de la manière suivante. Un algorithme de négociation de clé à courbe elliptique est utilisé pour établir d'un secret partagé entre l'élément sécurisé SE et le serveur SM-DP+. Les clés de session S-ENC, S-MAC sont alors dérivées du secret partagé en utilisant la fonction de dérivation de clé X9.63 avec la fonction de hachage SHA-256.

En outre, l'élément sécurisé SE peut vérifier les données d'initialisation reçues et donc l'authenticité et l'intégrité du profil de communication P destiné à être installé. Cette étape permet également de vérifier que l'interface de communication entre l'unité de gestion de profil LPA et l'élément sécurisé SE est opérationnelle (i.e. fonctionnelle).

Lors de cette étape, l'élément sécurisé SE réalise par exemple l'étape [2] de la sous-procédure d'installation d'un profil telle que spécifiée dans la norme GSMA SGR22.

À l'étape S140, l'unité de gestion de profil LPA envoie, à l'élément sécurisé SE, une commande de suspension de chargement CMD_SSP signalant à l'élément sécurisé SE de suspendre le chargement du profil P.

La figure 3A illustre un mode de réalisation selon lequel la commande CMD_SSP est comprise dans un message dédié envoyé par l'unité de gestion LPA à l'élément sécurisé SE. En particulier, la commande CMD_SSP peut être émise par l'unité de gestion de profil LPA en réponse à un message de l'élément sécurisé SE signalant que les clés de sessions S-ENC, S-MAC ont été générées (message non représenté sur la figure 3A).

De manière alternative, la commande de suspension de chargement CMD_SSP pourrait être comprise dans la commande d'initialisation de chargement CMD_LBPP envoyé à l'étape S120. Bien que, dans cette alternative, la commande CMD_SSP soit reçue dès l'initialisation du chargement du profil P, il convient de souligner que la commande CMD_SSP indique à l'élément sécurisé SE de suspendre le chargement après la génération des clés de sessions S-ENC, S-MAC.

Les figures 3A-3B représentent, à titre d'exemple, un mode de réalisation dans lequel le chargement du profil P est suspendu suite à la génération des clés de sessions S-ENC, S-MAC et avant l'installation d'éléments de profil PE par l'élément sécurisé SE. Ce mode de réalisation est notamment décrit puisque celui-ci permet de minimiser le temps de chargement du profil P réalisé en usine par le fabricant, tout en assurant que le profil P enregistré dans le dispositif de communication APP est lié à l'élément sécurisé SE destiné à installer le profil P.

Cependant, dans le cadre de l'invention, il pourrait également être envisagé des modes de réalisation dans lesquels la suspension du chargement aurait lieu lors d'une étape ultérieure du chargement du profil P. Par exemple, le chargement du profil P pourrait être suspendu suite à une installation d'une partie des éléments de profil PE dans l'élément sécurisé SE.

À l'étape S150, suite à la réception de la commande de suspension CMD_SSP, l'élément sécurisé SE enregistre les données de contexte associées au chargement du profil P dans sa mémoire non-volatile MEM_SE. L'enregistrement de ces données de contexte permet de poursuivre ultérieurement le chargement du profil P. En particulier, l'élément sécurisé SE enregistre les clés de sessions S-ENC, S-MAC.

À l'étape S160, l'élément sécurisé SE envoie, à l'unité de gestion de profil LPA, un premier jeton PTK signé et suspend le chargement du profil P.

L'élément sécurisé SE peut notamment obtenir le premier jeton PTK en générant un nonce (i.e. un nombre aléatoire) et en signant celui-ci à partir d'une clé de chiffrement. Pour signer le nonce, l'élément sécurisé SE peut par exemple utiliser une clé privée associée à l'élément sécurisé SE, ou une clé de chiffrement dérivée de son identifiant unique (i.e. l'EID pour « eUICC Identifier » en anglais), et une quelconque fonction hachage (e.g. SHA-256).

Le premier jeton PTK permet de signaler à l'unité de gestion de profil LPA que l'élément sécurisé SE suspend le chargement du profil P. En outre, la signature du premier jeton PTK par l'élément sécurisé SE permet de prouver l'implication de l'élément sécurisé SE dans le chargement du profil P.

À l'étape S170, l'unité de gestion de profil LPA enregistre, dans la mémoire non-volatile MEM_APP du dispositif APP, le premier jeton PTK reçu en provenance l'élément sécurisé SE.

À l'étape S180, l'unité de gestion de profil LPA envoie, au serveur d'usine FCT_SRV, le premier jeton PTK signé par l'élément sécurisé SE.

Le serveur d'usine FCT_SRV peut, à l'étape S181, envoyer le premier jeton au serveur SM-DP+, ce qui permet de signaler à l'opérateur réseau que le profil P a été partiellement chargé dans l'élément sécurisé SE. La signature du premier jeton PTK par l'élément sécurisé SE permet en outre de prouver que le profil P a été chargé dans le dispositif APP équipé de l'élément sécurisé SE effectivement destiné à recevoir ce profil P (i.e. l'élément sécurisé cible de ce profil).

De manière alternative, l'unité de gestion de profil LPA pourrait envoyer le premier jeton PTK directement au serveur SM-DP+, ou à un serveur de l'opérateur réseau.

À l'étape S190, le dispositif de communication APP est mis hors tension, ce qui entraine la mise hors tension de l'élément sécurisé SE. Comme détaillé ci-après, la mise hors tension du dispositif APP est optionnelle et décrite à titre d'exemple non-limitatif.

Tel qu'illustré par le mode de réalisation de la figure 2B, à l'issue de la première phase de chargement S100, le dispositif de communication APP comprend en mémoire : le package d'installation BPP incluant les éléments chiffrés xPE du profil P ; et le premier jeton PTK signé par l'élément sécurisé SE. L'élément sécurisé SE comprend lui en mémoire les données de contexte associées au chargement du profil P, dont les clés de sessions S-ENC, S-MAC associées au profil P et permettant de déchiffrer les éléments chiffrés xPE.

Ainsi, le dispositif APP dispose, à l'issue de la première phase de chargement S100, de toutes les informations pour terminer l'installation du profil P dans l'élément sécurisé SE.

La figure 3B illustre la deuxième phase S200 de chargement du profil de communication P dans l'élément sécurisé SE. Tel qu'illustré par cette figure, la deuxième phase de chargement S200 comprend tout ou partie des étapes S210 à S280 décrites ci-après.

À l'étape S210, le dispositif de communication APP est mis sous tension (i.e. démarré), ce qui entraine une mise sous tension de l'élément sécurisé SE.

Les figures 3A-3B représentent, à titre d'exemple non-limitatif, un mode de réalisation dans lequel le dispositif APP est arrêté puis redémarré entre la première phase S100 et la deuxième phase S200 de chargement du profil P. Ce mode de réalisation est notamment décrit pour illustrer un déploiement du dispositif de communication APP sur le terrain, c'est-à-dire que le dispositif APP est sorti de l'usine du fabricant et est par exemple fourni à un utilisateur.

Toutefois, dans le cadre de l'invention, il pourrait également être envisagé des modes de réalisation selon lesquels le dispositif de communication APP est maintenu sous tension (i.e. reste allumé) entre la première S100 et la deuxième phase de chargement S200.

De manière générale, aucune limitation n'est attachée aux opérations réalisées par le dispositif APP entre la première phase S100 et la deuxième phase S200 de chargement du profil P. De même, aucune limitation n'est attachée à la durée entre la première S100 et la deuxième phase de chargement S200. À titre indicatif, le dispositif de communication APP pourrait réaliser, de manière similaire au procédé décrit ci-dessus, une première phase de chargement d'un autre profil de communication dans l'élément sécurisé SE.

À l'étape S220, l'unité de gestion de profil LPA envoie, à l'élément sécurisé SE, une commande de reprise de chargement CMD_RSM signalant à l'élément sécurisé SE de reprendre le chargement du profil de communication P. Cette commande CMD_RSM déclenche la complétion de l'installation du profil P dans l'élément sécurisé SE et donc l'envoi des paquets restants du package d'installation BPP. Ainsi, on entend par « reprise » que le chargement du profil suspendu temporairement se poursuit et n'est pas de nouveau initié. En particulier, les éléments chiffrés du profil ayant été préalablement enregistrés dans la mémoire du dispositif n'ont pas à être de nouveau reçus depuis le serveur, et les clés de session ou le jeton n'ont pas à être de nouveau générés.

La figure 3B illustre un mode de réalisation dans lequel l'envoi de la commande de reprise de chargement CMD_RSM est ici déclenché par la mise sous tension du dispositif APP.

De manière alternative, l'envoi de la commande de reprise de chargement CMD_RSM pourrait être déclenché par une demande d'accès réseau du dispositif APP. Également, la reprise de chargement du profil P pourrait être déclenchée par une commande d'activation obtenue via une interface utilisateur, ou une commande d'activation émise par un serveur tiers (e.g. suite à l'activation pré-activation du profil sur Internet). Un changement du mode de fonctionnement du dispositif de communication (e.g. une sortie du mode « In-Factory Profile Provisioning » en anglais) pourrait en outre déclencher la reprise du chargement du profil P.

À l'étape S230, l'élément sécurisé SE obtient (i.e. lit en mémoire) les données de contexte associées au chargement du profil P, et enregistrées dans la mémoire non-volatile MEM_SE lors de la suspension du chargement du profil P. En particulier, l'élément sécurisé SE obtient les clés de sessions S-ENC, S-MAC enregistrées.

À l'étape S240, l'unité de gestion de profil LPA envoie, à l'élément sécurisé SE, le premier jeton PTK.

L'élément sécurisé SE vérifie alors la signature du premier jeton PTK, et donc son implication préalable dans la première phase S100 de chargement du profil P. Si (et seulement si) le résultat de cette vérification est positif (i.e. signature valide), le procédé se poursuit à l'étape S260 et le chargement du profil P se poursuit ; sinon (i.e. signature invalide), le procédé s'achève.

À l'étape S250, l'unité de gestion de profil LPA envoie, à l'élément sécurisé SE, les paquets restants du package d'installation BPP du profil P. En particulier, l'unité de gestion de profil LPA envoie, à l'élément sécurisé SE, les éléments chiffrés xPE du profil P.

Il convient de noter que les envois de la commande CMD_RSM, du premier jeton PTK, et des éléments chiffrés xPE peuvent être réalisés de manière concomitante ou dans des messages distincts.

À l'étape S260, l'élément sécurisé SE déchiffre les éléments chiffrés xPE reçus en utilisant les clés de sessions S-ENC, S-MAC.

À l'étape S270, l'élément sécurisé SE installe les éléments déchiffrés PE du profil P dans la mémoire MEM_SE de l'élément sécurisé SE. Les éléments PE du profil P sont ainsi enregistrés dans un domaine sécurisé ISD-P de l'élément sécurisé SE.

Lors des étapes S250-S270, l'unité de gestion de profil LPA et l'élément sécurisé SE réalisent par exemple les étapes [3] à [6] de la sous-procédure d'installation d'un profil telle que spécifiée dans la norme GSMA SGP.22.

À l'étape S280, l'élément sécurisé SE envoie, à l'unité de gestion de profil LPA, un deuxième jeton PIR signé par l'élément sécurisé SE, par exemple en utilisant une clé privée associée à l'élément sécurisé SE. Le deuxième jeton PIR indique que l'installation du profil P dans l'élément sécurisé SE est terminée.

L'unité de gestion de profil LPA peut envoyer, à l'étape S281, le deuxième jeton PIR au serveur SM-DP+, ce qui permet de signaler à l'opérateur réseau que l'installation du profil de communication P dans l'élément sécurisé SE a été complétée.

Tel qu'illustré par la figure 2C, à l'issue de la deuxième phase de chargement 5200, le profil de communication P, constitué des éléments PE (déchiffrés) du profil, est installé dans l'élément sécurisé SE. À l'issue de cette deuxième phase S200, le dispositif APP peut alors accéder aux services de l'opérateur réseau associé au profil P. Le dispositif de communication APP comprend en mémoire le deuxième jeton PIR signé par l'élément sécurisé SE.

Il est à noter que l'ordre dans lequel s'enchaînent les étapes d'un procédé mis en oeuvre par un élément sécurisé équipant un dispositif de communication ou les étapes d'un procédé mis en oeuvre par une unité de gestion de profil du dispositif de communication, notamment en référence aux dessins ci-joints, ne constitue qu'un exemple de réalisation dépourvu de tout caractère limitatif, des variantes étant possibles.

Un homme du métier comprendra que les modes de réalisation et variantes décrits ci-dessus ne constituent que des exemples non limitatifs de mise en oeuvre de l'invention. En particulier, l'homme du métier pourra envisager une quelconque adaptation ou combinaison des modes de réalisation et variantes décrits ci-dessus afin de répondre à un besoin bien particulier.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné.

## Revendications

1. Procédé mis en oeuvre par un élément sécurisé (SE) équipant un dispositif de communication (APP), le procédé comprenant, pour un profil de communication (P), une première phase (S100) de chargement du profil (P) dans l'élément sécurisé (SE) comprenant :
- une réception (S120), en provenance d'une unité de gestion de profil (LPA) du dispositif de communication (APP), d'une clé publique (PK.DP) d'un serveur de fourniture de profil (SM-DP+) associée au profil (P) ;
- une génération (S130) de clés de sessions (S-ENC, S-MAC) à partir de la clé publique (PK.DP) du serveur de fourniture de profil (SM-DP+) associée au profil (P) ;
- suite à une réception (S140) d'une commande de suspension de chargement (CMD_SSP) en provenance de l'unité de gestion de profil (LPA), une suspension (S150-S160) du chargement du profil (P) comprenant :
- un enregistrement (S150), dans une mémoire (MEM_SE) de l'élément sécurisé (SE), des clés de sessions (S-ENC, S-MAC) générées ; et
- un envoi (S160), à l'unité de gestion de profil (LPA), d'un jeton (PTK) signé à partir d'une clé de chiffrement de l'élément sécurisé (SE).

2. Procédé selon la revendication 1, dans lequel la suspension (S150-S160) du chargement du profil (P) est déclenchée suite à la génération (S130), par l'élément sécurisé (SE), des clés de sessions (S-ENC, S-MAC) et avant une réception (S250), par l'élément sécurisé (SE), d'éléments chiffrés du profil (xPE).

3. Procédé selon la revendication 1 ou 2, dans lequel le jeton (PTK) signé par l'élément sécurisé (SE) est envoyé (S180) à destination du serveur de fourniture de profil (SM-DP+) ou d'un serveur tiers (FCT_SRV).

4. Procédé selon l'une des revendications 1 à 3, comprenant une deuxième phase (S200) de chargement du profil (P) comprenant, suite à la réception (S220) d'une commande de reprise de chargement (CMD_RSM) en provenance de l'unité de gestion de profil (LPA) :
- une réception (S240, S250), en provenance de l'unité de gestion de profil (LPA), du jeton (PTK) et d'éléments chiffrés du profil (xPE) ; et
- un déchiffrement (S260) des éléments chiffrés (xPE) du profil (P) à partir des clés de sessions enregistrées (S-ENC, S-MAC) et une installation (S270) des éléments déchiffrés du profil (P) dans la mémoire (MEM_SE) de l'élément sécurisé (SE).

5. Procédé selon la revendication 4, dans lequel la deuxième phase de chargement (S200) est déclenchée par : une mise sous tension (S210) du dispositif de communication (APP) ; une demande d'accès réseau du dispositif de communication (APP) ; une commande d'activation obtenue via une interface utilisateur ; une commande d'activation émise par un serveur tiers ; ou un changement d'un mode de fonctionnement du dispositif de communication (APP).

6. Procédé selon la revendication 4 ou 5, comprenant, suite à la première phase de chargement (S100) et avant la deuxième phase de chargement (S200), une mise hors tension (S190) et une mise sous tension (S210) du dispositif de communication (APP), la deuxième phase de chargement est déclenchée par : la mise sous tension (S210) du dispositif de communication (APP) ; ou par une demande d'accès réseau suivant la mise sous tension (S210).

7. Procédé selon l'une des revendications 1 à 6, comprenant, pour un autre profil de communication, une dite première phase (S100) de chargement de l'autre profil.

8. Procédé selon l'une des revendications 1 à 7, dans lequel la commande de suspension de chargement (CMD_SSP) et la clé publique (PK.DP) du serveur de fourniture de profil (SM-DP+) sont comprises dans un même message (CMD_LBPP).

9. Procédé mis en oeuvre par une unité de gestion de profil (LPA) d'un dispositif de communication (APP), le procédé comprenant, pour un profil de communication (P), une première phase (S100) de chargement du profil (P) dans un élément sécurisé (SE) équipant le dispositif de communication (APP) comprenant :
- un enregistrement (S110), dans une mémoire du dispositif de communication (MEM_APP), d'éléments chiffrés du profil (P) fournis par un serveur de fourniture de profil (SM-DP+) ;
- un envoi (S120), à l'élément sécurisé (SE), d'une clé publique (PK.DP) du serveur de fourniture de profil (SM-DP+) associée au profil (P) ;
- un envoi (S140), à l'élément sécurisé (SE), d'une commande de suspension de chargement (CMD_SSP) ; et
- un enregistrement (S170), dans la mémoire du dispositif de communication (APP), d'un jeton (PTK) reçu en provenance de l'élément sécurisé (SE) et signé par l'élément sécurisé (SE) à partir d'une clé de chiffrement de l'élément sécurisé (SE).

10. Procédé selon la revendication 9, comprenant une deuxième phase (S200) de chargement du profil (P) comprenant :
- un envoi (S220), à l'élément sécurisé (SE), d'une commande de reprise de chargement (CMD_RSM) ; et
- un envoi (S240, S250), à l'élément sécurisé (SE), du jeton (PTK) et d'éléments chiffrés (xPE) du profil (P).

11. Élément sécurisé (SE) comprenant :
- un module de réception (S120), en provenance d'une unité de gestion de profil (LPA) d'un dispositif de communication (APP), d'une clé publique (PK.DP) d'un serveur de fourniture de profil (SM-DP+) associée au profil (P) ;
- un module de génération (S130) de clés de sessions (S-ENC, S-MAC) à partir de la clé publique (PK.DP) du serveur de fourniture de profil (SM-DP+) associée au profil (P) ;
- un module de suspension (S150-S160) d'un chargement du profil (P) suite à une réception (S140) d'une commande de suspension de chargement (CMD_SSP) en provenance de l'unité de gestion de profil (LPA), le module de suspension comprenant :
- un module d'enregistrement (S150), dans une mémoire (MEM_SE) de l'élément sécurisé (SE), des clés de sessions (S-ENC, S-MAC) générées ; et
- un module d'envoi (S160), à l'unité de gestion de profil (LPA), d'un jeton (PTK) signé à partir d'une clé de chiffrement de l'élément sécurisé (SE).

12. Unité de gestion de profil de communication (LPA) d'un dispositif de communication (APP) et comprenant :
- un module d'enregistrement (S110), dans une mémoire du dispositif de communication (MEM_APP), d'éléments chiffrés du profil (P) fournis par un serveur de fourniture de profil (SM-DP+) ;
- un module d'envoi (S120), à un élément sécurisé (SE) équipant le dispositif de communication (APP), d'une clé publique (PK.DP) du serveur de fourniture de profil (SM-DP+) associée au profil (P) ;
- un module d'envoi (S140), à l'élément sécurisé (SE), d'une commande de suspension de chargement (CMD_SSP) ; et
- un module d'enregistrement (S170), dans la mémoire du dispositif de communication (APP), d'un jeton (PTK) reçu en provenance de l'élément sécurisé (SE) et signé par l'élément sécurisé (SE) à partir d'une clé de chiffrement de l'élément sécurisé (SE).

13. Dispositif de communication (APP) comprenant un élément sécurisé (SE) selon la revendication 11 et/ou une unité de gestion de profil (LPA) selon la revendication 12.

14. Programme d'ordinateur (PROG_SE, PROG_APP) comportant des instructions pour l'exécution des étapes d'un procédé selon l'une des revendications 1 à 8 lorsque le programme est exécuté par au moins un processeur (PROC_SE), ou pour l'exécution des étapes d'un procédé selon la revendication 9 ou 10 lorsque ledit programme est exécuté par au moins un processeur (PROC_APP).

15. Support d'informations (MEM_SE, MEM_APP) lisible par un processeur (PROC_SE, PROC_APP) sur lequel est enregistré un programme d'ordinateur (PROG_SE, PROG_APP) selon la revendication 14.
